# EUROPÄISCHE PATENTSCHRIFT

(11) **EP 1 057 250 B1**
(45) Veröffentlichungstag und Bekanntmachung des Hinweises auf die Patenterteilung: **19.05.2004**
(21) Anmeldenummer: 99916750.5
(22) Anmeldetag: 18.02.1999
(51) Int. Cl.: H02M 7/48, H02M 5/458

(54) **VORRICHTUNG ZUM ANSTEUERN VON WECHSELRICHTERN**
DEVICE FOR CONTROLLING INVERTERS
DISPOSITIF POUR ASSURER LA COMMANDE D'ONDULEURS

(30) Priorität: 24.02.1998 DE 19807472
(43) Veröffentlichungstag der Anmeldung: 06.12.2000
(73) Patentinhaber: ROBERT BOSCH GMBH, 70442 Stuttgart (DE)
(72) Erfinder: MEISTER, Werner, D-64385 Reichelsheim (DE); WEBER, Rupert, D-63936 Schneeberg (DE); KUNZ, Olaf, D-64689 Grasellenbach (DE); FROEHLICH, Gerhard, D-64720 Michelstadt (DE); MELZER, Siegfried, D-64739 Hoechst (DE)
(86) Internationale Anmeldenummer: PCT/DE1999/000448
(87) Internationale Veröffentlichungsnummer: WO 1999/043076

(56) Entgegenhaltungen:
- EP-A- 0 266 598
- US-A- 3 908 132
- US-A- 4 034 232
- US-A- 4 772 997
- US-A- 4 934 822
- US-A- 5 142 468
- US-A- 5 640 315
- PATENT ABSTRACTS OF JAPAN vol. 16, no. 67 (E-1168), 19. Februar 1992 (1992-02-19) & JP 03 261376 A (HITACHI LTD), 21. November 1991 (1991-11-21)
- PATENT ABSTRACTS OF JAPAN vol. 96, no. 2, 29. Februar 1996 (1996-02-29) & JP 07 264849 A (NIPPON STEEL CORP.)

## Beschreibung

Die Erfindung geht aus von einer Vorrichtung zum Ansteuern von Wechselrichtern nach der Gattung des unabhängigen Anspruchs. Aus der EP-A 0 266 598 ist ein elektrischer Servoantrieb bekannt. Eine Drehstromgleichrichterbrücke erzeugt aus der Netzspannung eine Zwischenkreisgleichspannung, die zwei parallel geschaltete Wechselrichter speist. Eine Drehfeldmaschine weist drei Phasenwicklungen auf, die jeweils in zwei getrennten, parallelen Stränge aufgeteilt sind und sternförmig verschaltet sind. Die jeweils zwei getrennten, parallelen Stränge werden von den einzelnen Wechselrichtern bestromt. Die Schaltelemente der Wechselrichter werden zur Erzeugung eines sinusförmigen Ausgangsstroms pulsweitenmoduliert angesteuert. Um Geräusche am Antrieb zu reduzieren, erfolgt die Steuerung der Wechselrichter mit phasenverschobenen Ansteuersignalen einer gemeinsamen Ansteuerstufe. Aus US 5,142,468 ist ebenfalls eine Einrichtung zur Ansteuerung zweier pulsweitenmodulierten Inverter bekannt. Den beiden Invertern werden jeweils Trägersignale zugeführt, von denen das eine gegenüber dem anderen um 0° oder 180° phasenverschoben sein kann. Aus der US 4, 772, 997 ist eine Anordnung bekannt, bei der ein gesteuerter Gleichrichter einen Wechselrichter versorgt. Beim Start der Anordnung werden der Gleichrichter und der Wechselrichter synchronisiert. Bei dem Wechselrichter handelt es sich um einen Thyristorwechselrichetr mit Stromzwischenkreis, dessen Thyristoren sicher und rechtzeitig gelöscht werden müssen. Hierzu sind Löschkondensatoren vorgesehen, die über die gesteuerte Gleichrichterbrücke geladen/entladen werden. Eine Synchronisation stellt sicher, dass die Kondensatoren rechtzeitig geladen/entladen werden.

### Vorteile der Erfindung

Die erfindungsgemäße Vorrichtung zum Ansteuern von Wechselrichtern weist zumindest zwei Wechselrichter auf. Sie erzeugen aus einer Gleichspannung eine Wechselspannung. Schaltelemente der Wechselrichter werden pulsweitenmoduliert angesteuert. Die erfindungsgemäße Vorrichtung zeichnet sich dadurch aus, daß ein erster Pulsweitenmodulator des ersten Wechselrichters und ein zweiter Pulsweitenmodulator des weiteren Wechselrichters synchronisiert sind. Durch die Synchronisation der von einem Gleichspannungszwischenkreis gespeisten Wechselrichter kann eindeutig ein solcher Erfassungszeitpunkt von Meßsignalen zur weiteren Signalverarbeitung festgelegt werden, zu dem sichergestellt ist, daß keines der Schaltelemente der beiden Wechselrichter eine Schalthandlung ausführt. Die Meßsignale werden dadurch relativ störungsfrei erfaßt. Zweckmäßigerweise ist zur Synchronisation ein spezielles Synchronisationssignal vorgesehen, das jedem Pulsweitenmodulator des jeweiligen Wechselrichters separat, beispielsweise über ein Bussystem, zugeführt wird. Dadurch können ungewollte bauteileabhängige Signalverschiebungen kompensiert werden. Das Synchronisationssignal wird zyklisch an die Pulsweitenmodulatoren abgegeben. Eine diesbezügliche Steuerung zur Generierung des Synchronisationssignals könnte einem die Zwischenkreisspannung erzeugenden Umrichter beziehungsweise einem Versorgungsmodul zugeordnet sein.

Die weitere erfindungsgemäße Vorrichtung zum Ansteuern von Wechselrichtern weist zumindest einen ersten Wechselrichter auf. Dieser erzeugt aus einer Gleichspannung eine Wechselspannung. Schaltelemente des ersten Wechselrichters werden über einen ersten Pulsweitenmodulator pulsweitenmoduliert angesteuert. Ein Versorgungsmodul wandelt eine Wechselspannung in eine Gleichspannung um, mit der der erste Wechselrichter gespeist wird. Ein Versorgungspulsweitenmodulator des Versorgungsmoduls steuert dessen Schaltelemente ebenfalls pulsweitenmoduliert an. Die erfindungsgemäße Vorrichtung zeichnet sich dadurch aus, daß der erste Pulsweitenmodulator des ersten Wechselrichters und der Versorgungspulsweitenmodulator synchronisiert sind. Durch die Synchronisation von erstem Wechselrichter und Versorgungsmodul - beispielsweise ebenfalls ein Wechselrichter - kann eindeutig ein solcher Erfassungszeitpunkt von Meßsignalen zur weiteren Signalverarbeitung festgelegt werden, zu dem sichergestellt ist, daß keines der Schaltelemente des ersten Wechselrichters und des Versorgungsmoduls eine Schalthandlung ausführt. Die Meßsignale werden dadurch relativ störungsfrei erfaßt. Zweckmäßigerweise ist zur Synchronisation ein spezielles Synchronisationssignal vorgesehen, das dem ersten Pulsweitenmodulator und dem Versorgungspulsweitenmodulator separat, beispielsweise über ein Bussystem, zugeführt wird. Dadurch können ungewollte bauteileabhängige Signalverschiebungen kompensiert werden.

Eine zweckmäßige Ausgestaltung sieht vor, ein erstes Trägersignal des ersten Pulsweitenmodulators mit einem zweiten Trägersignal des zweiten Pulsweitenmodulators und/oder einem Versorgungsträgersignal des Versorgungspulsweitenmodulators zu synchronisieren, so daß ein zeitlich deckungsgleicher Verlauf der Trägersignale erreicht wird. Als erstes und zweites Trägersignal und/oder Versorgungsträgersignal ist beispielsweise ein Dreiecksignal verwendet. Die Trägerkurvenform hängt von dem gewählten Modulationsverfahren ab und könnte auch einen treppenförmigen Verlauf aufweisen. Wesentlich jedoch ist der synchronisierte Verlauf der Trägersignale bzw. des Versorgungsträgersignals aller Pulsweitenmodulatoren. Eine Erfassung eines Meßwertes zur Generierung einer Steuer- bzw. Regelgröße erfolgt zu dem Zeitpunkt, wenn das Dreieckssignal die Richtung ändert, das heißt zu dem Zeitpunkt, wenn das Dreiecksignal die Spitze erreicht. Zu diesem Zeitpunkt wird keines der Schaltelemente zu einem Schaltvorgang veranlaßt. Die Störungseinflüsse solcher Schaltvorgänge werden zu den genannten Erfassungszeitpunkten bei synchronisierten Trägersignalen minimiert.

Weitere vorteilhafte Ausgestaltungen der Erfindung ergeben sich aus weiteren abhängigen Ansprüchen und aus der Beschreibung.

### Zeichnung

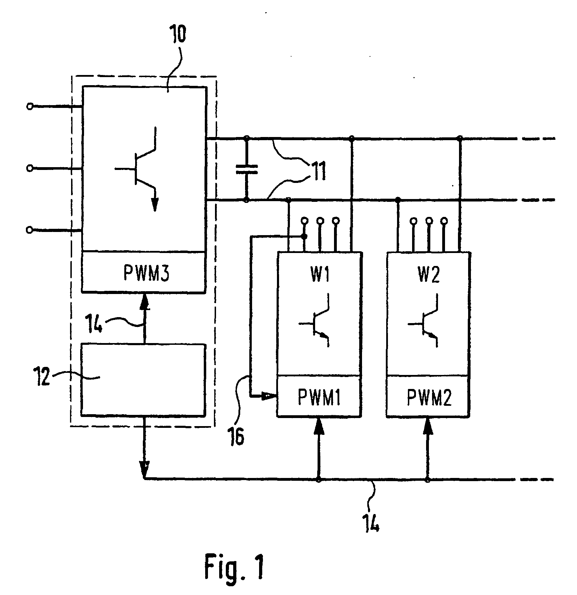

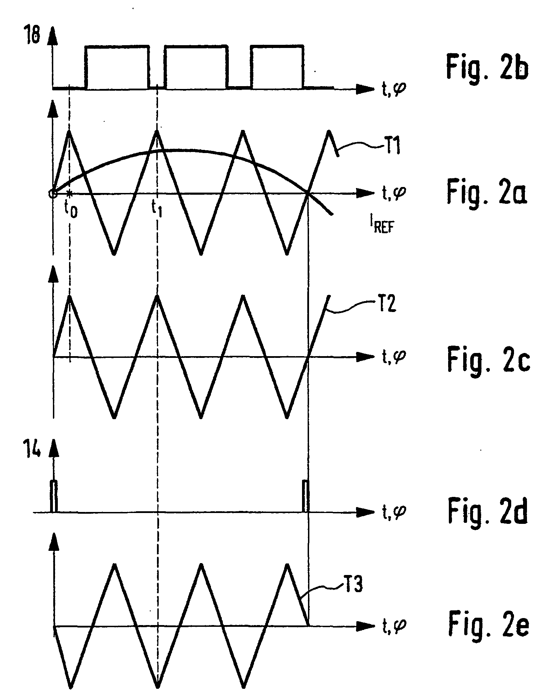

Ein Ausführungsbeispiel der Erfindung ist in der Zeichnung dargestellt und wird im folgenden näher beschrieben. Es zeigen Figur 1 ein Blockschaltbild und Figur 2a - e mögliche Signalverläufe einer erfindungsgemäßen Vorrichtung.

### Beschreibung des Ausführungsbeispiels

Ein Versorgungsmodul 10 erzeugt aus einer dreiphasigen Wechselspannung eine Gleichspannung eines Gleichspannungszwischenkreises 11. Aus dem Gleichspannungszwischenkreis 11 werden ein erster Wechselrichter W1 und ein zweiter Wechselrichter W2, die parallel verschaltet sind, gespeist. Dem ersten Wechselrichter W1 ist ein erster Pulsweitenmodulator PWM1, dem zweiten Wechselrichter W2 ein zweiter Pulsweitenmodulator PWM2 zugeordnet. An den Ausgangsleitungen der Wechselrichter W1, W2 können beispielsweise in der Figur 1 nicht dargestellte Motoren angeschlossen werden. Exemplarisch dargestellt wird für den ersten Wechselrichter W1 an einer Ausgangsleitung eine Meßgröße 16 abgegriffen, die zur Generierung einer Stellgröße dem ersten Pulsweitenmodulator PWM1 zugeführt ist. Das Versorgungsmodul 10 umfaßt einen Versorgungspulsweitenmodulator PWM3 und eine Steuerung 12, die ein Synchronisationssignal 14 erzeugt. Das Synchronisationssignal 14 ist sowohl dem ersten und dem zweiten Pulsweitenmodulator PWM1, PWM2 als auch dem Versorgungspulsweitenmodulator PWM3 zugeführt.

In Figur 2a ist der zeitliche bzw. winkelabhängige Verlauf eines dreieckförmigen ersten Trägersignals T1 und einer Sinushalbwelle eines Referenzsignals I_{REF} dargestellt. Bei Verwendung des Unterschwingungsverfahrens ergibt sich daraus der zeitabhängige bzw. winkelabhängige Verlauf eines Schaltsignals 18 für ein Schaltelement des ersten Wechselrichters W1, Figur 2b. Figur 2c zeigt den zeitabhängigen bzw. winkelabhängigen Verlauf eines ebenfalls dreieckförmigen zweiten Trägersignals T2, das mit dem ersten Trägersignal T1 in der Weise synchronisiert ist, daß die zeitlichen Verläufe der beiden Trägersignale T1, T2 deckungsgleich sind. Das erste Trägersignal T1 dient dem ersten Pulsweitenmodulator PWM1 zur Erzeugung eines Schaltsignals 18 für ein Schaltelement des ersten Wechselrichters W1, das zweite Trägersignal T2 dem zweiten Pulsweitenmodulator PWM2 in übereinstimmender Weise zur Erzeugung eines nicht gezeigten Ansteuersignals für ein Schaltelement des zweiten Wechselrichters W2. In Figur 2d ist der zeitabhängige bzw. winkelabhängige Verlauf des Synchronisationssignals 14 dargestellt. In regelmäßigen zeitlichen Abständen erhalten erster und zweiter Pulsweitenmodulator PWM1, PWM2 und Versorgungspulsweitenmodulator PWM3 einen Synchronisationsimpuls. Figur 2e zeigt den zeitabhängigen bzw. winkelabhängigen Verlauf eines Versorgungsträgersignals T3 des Versorgungspulsweitenmodulators PWM3. Der Verlauf ist gegenüber den beiden anderen Trägersignalen T1, T2 um 180° phasenverschoben und in der Weise synchronisiert, daß die beiden Trägersignale und das Versorgungsträgersignal zum gleichen Zeitpunkt t0, t1 ihre Richtung ändern. Wesentlich ist, daß die Trägersignale T1, T2 und das Versorgungsträgersignal T3 zu den gleichen Zeitpunkten ihre Spitzen erreichen, da dann keine Schalthandlung ausgeführt wird.

Die in dem Versorgungsmodul 10 integrierte Steuerung 12 erzeugt ein Synchronisationssignal 14, das über ein Bussystem den beiden Pulsweitenmodulatoren PWM1, PWM2 und dem Versorgungspulsweitenmodulator PWM3 zugeführt wird. Diese Pulsweitenmodulatoren PWM1, PWM2 erzeugen Schaltsignale 18 für die Schaltelemente der Wechselrichter W1, W2. Ein Dreiphasen-Wechselrichter W1, W2 bzw. Versorgungsmodul 10 ist aus jeweils sechs geeignet verschalteten Leistungshalbleiterschaltern mit antiparallelen Dioden aufgebaut. Bei dem bekannten Unterschwingungsverfahren wird das erste Trägersignal T1 mit einem Referenzsignal I_{REF}, das beispielsweise einen sinusförmigen Stromsollwert darstellt, verglichen. Solange das Referenzsignal I_{REF} positiver ist als das dreieckförmige erste Trägersignal T1, wird ein entsprechend anzusteuerndes Schaltelement leitend geschaltet. Der zweite Pulsweitenmodulator PWM2 geht nach demselben, in der Figur 2 nicht explizit dargestellten Prinzip vor. Auch das Versorgungsmodul 10 ist als Wechselrichter ausgeführt, der prinzipiell in übereinstimmender Weise wie die beiden anderen Wechselrichter W1, W2 arbeitet, natürlich mit dem Unterschied, daß im Normalbetrieb aus der Netzwechselspannung eine Zwischenkreis-Gleichspannung eingespeist wird. Wesentlich ist es, daß der verlauf der beiden Trägersignale T1, T2 und des Versorgungsträgersignals T3 synchronisiert ist. Die Dreieckgeneratoren zur Erzeugung der jeweiligen Trägersignale T1, T2, T3 der beiden Pulsweitenmodulatoren PWM1, PWM2 und des Versorgungspulsweitenmodulators PWM3 erhalten zeitsynchron das von der Steuerung 12 abgegebene Synchronisationssignal 14. Auf ein Synchronisationssignal 14 hin erzeugen die Dreieckgeneratoren in übereinstimmender Weise beispielsweise im Nulldurchgang die steigende oder fallende Flanke des Dreiecksignals der jeweiligen Trägersignale T1, T2, T3. Dadurch wird erreicht, daß sowohl das erste und zweite Trägersignal T1, T2 als auch das Versorgungsträgersignal T3 zum gleichen Zeitpunkt t0, t1 den betragsmäßig größten Wert erreichen, das heißt sysnchronisiert sind. Bei dem gezeigten Unterschwingungsverfahren ist zu diesem Zeitpunkt t0, t1 sichergestellt, daß keines der Schaltelemente der Wechselrichter W1, W2 bzw. des Versorgungsmoduls 10 den Schaltzustand ändert. Somit bietet sich gerade dieser Zeitpunkt t0, t1 dazu an, eine Meßgröße 16, beispielsweise den Phaseniststrom eines Antriebs, zur weiteren Signalverarbeitung zu erfassen.

Wie in der Figur 1 durch die Punkte angedeutet, können an dem Gleichspannungszwischenkreis 11 weitere Wechselrichter angeschlossen werden, die in übereinstimmender Weise ein PWM-Signal mit Hilfe eines weiteren Trägersignals erzeugen, das ebenfalls mit den Trägersignalen T1, T2, T3 synchronisiert ist. Ebenfalls könnte nur ein Wechselrichter W1 vorgesehen sein, der erfindungsgemäß mit dem Versorgungsmodul 10 synchronisiert ist.

Im Normalbetrieb speist das Versorgungsmodul 10 den Gleichspannungszwischenkreis 11, um damit ersten und zweiten Wechselrichter W1, W2 zu versorgen. Die Antriebe können jedoch auch generatorisch betrieben werden, so daß die beiden wechselrichter W1, W2 dem Gleichspannungszwischenkreis 11 Energie zuführen. Das Versorgungsmodul 10 erzeugt aus der Zwischenkreis-Gleichspannung eine Wechselspannung, die in das Wechselspannungsnetz zurückgespeist wird. Auch in dieser Betriebsart sind erster und zweiter Pulsweitenmodulator PWM1, PWM2 und Versorgungspulsweitenmodulator PWM3 in der beschriebenen Weise synchronisiert.

Die beschriebene Vorrichtung dient nicht nur der Synchronisation von Wechselrichtern. Sie kann prinzipiell auch für Umrichter zum Einsatz kommen, die auf ein entsprechendes Impulsverfahren zur Ansteuerung zurückgreifen.

## Patentansprüche

1. Vorrichtung zum Ansteuern von Wechselrichtern, mit einem ersten und wenigstens einem weiteren Wechselrichter (W1, W2), die aus einer Gleichspannung eine Wechselspannung erzeugen, wobei Schaltelemente des ersten Wechselrichters (W1) und des weiteren Wechselrichters (W2) pulsweitenmoduliert angesteuert sind, wobei ein erster Pulsweitenmodulator (PWM1) des ersten Wechselrichters (W1) und ein weiterer Pulsweitenmodulator (PWM2) des weiteren Wechselrichters (W2) synchronisiert sind, indem ein erstes Trägersignal (T1) des ersten Pulsweitenmodulators (PWM1) mit einem weiterem Trägersignal (T2) des weiteren Pulsweitenmodulators (PWM2) synchronisiert ist, **dadurch gekennzeichnet, dass** dem ersten Pulsweitenmodulator (PWM1) und dem weiteren Pulsweitenmodulator (PWM2) ein Synchronisationssignal (14) zugeführt ist zur Synchronisation der beiden Trägersignale (T1, T2).

2. Vorrichtung zum Ansteuern von Wechselrichtern, mit einem ersten Wechselrichter (W1), der aus einer Gleichspannung eine Wechselspannung erzeugt, wobei Schaltelemente des ersten Wechselrichters (W1) pulsweitenmoduliert angesteuert sind, mit einem Versorgungsmodul (10), das aus einer Wechselspannung eine Gleichspannung für den ersten Wechselrichter (W1) erzeugt, wobei Schaltelemente des Versorgungsmoduls (10) über einen Versorgungspulsweitenmodulator (PWM3) pulsweitenmoduliert angesteuert sind, **dadurch gekennzeichnet, dass** der Versorgungspulsweitenmodulator (PWM3) mit einem ersten Pulsweitenmodulator (PWM1) des ersten Wechselrichters (W1) synchronisiert ist, indem ein erstes Trägersignal (T1) des ersten Pulsweitenmodulators (PWM1) mit einem Versorgungsträgersignal (T3) des Versorgungspulsweitenmodulators (PWM3) synchronisiert ist.

3. Vorrichtung nach Anspruch 1, **dadurch gekennzeichnet, dass** ein Versorgungsmodul (10) vorgesehen ist, das aus einer Wechselspannung eine Gleichspannung erzeugt, die den ersten Wechselrichter (W1) und/oder den weiteren Wechselrichter (W2) versorgt, wobei Schaltelemente eines aus einer Wechselspannung eine Gleichspannung erzeugenden Versorgungsmoduls (10) über einen Versorgungspulsweitenmodulator (PWM3) pulsweitenmoduliert angesteuert sind, und der Versorgungspulsweitenmodulator (PWM3) mit dem ersten Pulsweitenmodulator (PWM1) und/oder dem weiteren Pulsweitenmodulator (PWM2) synchronisiert ist.

4. Vorrichtung nach Anspruch 2, **dadurch gekennzeichnet, dass**, ein weiterer Wechselrichter (W2) vorgesehen ist, der aus einer Gleichspannung eine Wechselspannung erzeugt, wobei Schaltelemente des weiteren Wechselrichters (W2) über einen weiteren Pulsweitenmodulator (PWM2) pulsweitenmoduliert angesteuert sind, und der weitere Pulsweitenmodulator (PWM2) mit dem ersten Pulsweitenmodulator (PWM1) und/oder dem Versorgungspulsweitenmodulator (PWM3) synchronisiert ist.

5. Vorrichtung nach einem der Ansprüche 2 bis 4, **dadurch gekennzeichnet, dass** dem ersten Pulsweitenmodulator (PWM1) und/oder dem Versorgungspulsweitenmodulator (PWM3) und/oder dem weiteren Pulsweitenmodulator (PWM2) ein Synchronisationssignal (14) zugeführt ist.

6. Vorrichtung nach einem der Ansprüche 2 bis 5, **dadurch gekennzeichnet, dass** ein erstes Trägersignal (T1) des ersten Pulsweitenmodulators (PWM1) mit einem weiteren Trägersignal (T2) des weiteren Pulsweitenmodulators (PWM2) und/oder mit einem Versorgungsträgersignal (T3) des Versorgungspulsweitenmodulators (PWM3) synchronisiert wird.

7. Vorrichtung nach Anspruch 6, **dadurch gekennzeichnet, dass** als erstes und/oder weiteres Trägersignal (T1,T2) und/oder Versorgungsträgersignal (T3) ein Dreiecksignal verwendet wird.

8. Vorrichtung nach Anspruch 7, **dadurch gekennzeichnet, dass** eine Erfassung einer Messgröße (16) zur Generierung einer Steuer- bzw. Regelgröße zu dem Zeitpunkt (t0,t1) erfolgt, wenn das Dreiecksignal die Richtung ändert.

9. Vorrichtung nach einem der vorhergehenden Ansprüche, **dadurch gekennzeichnet, dass** als Versorgungsmodul (10) ein Wechselrichter verwendet wird.

## Claims

1. A device for driving inverters, with a first and at least one further inverter (W1, W2), which produce an alternating voltage from a direct voltage, wherein switching elements of the first inverter (W1) and the further inverter (W2) are driven in pulse width modulated manner, wherein a first pulse width modulator (PWM1) of the first inverter (W1) and a further pulse width modulator (PWM2) of the further inverter (W2) are synchronised, by synchronising a first carrier signal (T1) of the first pulse width modulator (PWM1) with a further carrier signal (T2) of the further pulse width modulator (PWM2), **characterised in that** a synchronisation signal (14) is supplied to the first pulse width modulator (PWM1) and the further pulse width modulator (PWM2) to synchronise the two carrier signals (T1, T2).

2. A device for driving inverters, with a first inverter (W1), which produces an alternating voltage from a direct voltage, wherein switching elements of the first inverter (W1) are driven in pulse width modulated manner, with a supply module (10), which produces a direct voltage for the first inverter (W1) from an alternating voltage, wherein switching elements of the supply module (10) are driven in pulse width modulated manner via a supply pulse width modulator (PWM3), **characterised in that** the supply pulse width modulator (PWM3) is synchronised with a first pulse width modulator (PWM1) of the first inverter (W1) by synchronising a first carrier signal (T1) of the first pulse width modulator (PWM1) with a supply carrier signal (T3) of the supply pulse width modulator (PWM3).

3. A device according to claim 1, **characterised in that** a supply module (10) is provided, which produces a direct voltage from an alternating voltage, which direct voltage supplies the first inverter (W1) and/or the further inverter (W2), wherein switching elements of a supply module (10) producing a direct voltage from an alternating voltage are driven in pulse width modulated manner via a supply pulse width modulator (PWM3), and the supply pulse width modulator (PWM3) is synchronised with the first pulse width modulator (PWM1) and/or the further pulse width modulator (PWM2).

4. A device according to claim 2, **characterised in that** a further inverter (W2) is provided, which produces an alternating voltage from a direct voltage, wherein switching elements of the further inverter (W2) are driven in pulse width modulated manner via a further pulse width modulator (PWM2), and the further pulse width modulator (PWM2) is synchronised with the first pulse width modulator (PWM1) and/or the supply pulse width modulator (PWM3).

5. A device according to one of claims 2 to 4, **characterised in that** a synchronisation signal (14) is supplied to the first pulse width modulator (PWM1) and/or to the supply pulse width modulator (PWM3) and/or to the further pulse width modulator (PWM2).

6. A device according to one of claims 2 to 5, **characterised in that** a first carrier signal (T1) of the first pulse width modulator (PWM1) is synchronised with a further carrier signal (T2) of the further pulse width modulator (PWM2) and/or with a supply carrier signal (T3) of the supply pulse width modulator (PWM3).

7. A device according to claim 6, **characterised in that** a triangular signal is used as the first and/or further carrier signal (T1, T2) and/or supply carrier signal (T3).

8. A device according to claim 7, **characterised in that** a measured variable (16) is acquired to generate an open- or closed-loop control variable at time (t0, t1) when the triangular signal changes direction.

9. A device according to one of the preceding claims, **characterised in that** an inverter is used as the supply module (10).

## Revendications

1. Dispositif pour déclencher des convertisseurs de courant, équipé d'un premier convertisseur suivi d'au moins un deuxième (W1 et W2) qui produisent une tension alternative à partir d'une tension continue, les éléments de circuit du premier convertisseur (W1) et du convertisseur suivant (W2) étant déclenchés avec une modulation en largeur des impulsions, le premier modulateur d'impulsions en largeur (PWM1) du premier convertisseur (W1) et un autre modulateur d'impulsions en largeur (PWM2) du convertisseur suivant (W2) étant synchronisés par la synchronisation du premier signal porteur (T1) du premier modulateur (PWM1) avec un autre signal porteur (T2) du modulateur suivant (PWM2). Ce dispositif est **caractérisé par le fait qu'**un signal (14) est envoyé au premier modulateur (PWM1) et au modulateur suivant (PWM2) pour synchroniser les deux signaux porteurs (T1 et T2).

2. Dispositif pour déclencher des convertisseurs de courant avec un premier convertisseur (W1) produisant une tension alternative à partir d'une tension continue, les éléments de circuit du premier convertisseur (W1) étant déclenchés avec une modulation en largeur des impulsions, et un module d'alimentation (10) produisant à partir d'une tension alternative une tension continue pour le premier convertisseur (W1), les éléments de circuit du module (10) étant déclenchés avec une modulation en largeur des impulsions grâce à un modulateur d'impulsions en largeur (PWM3). Ce dispositif est **caractérisé par le fait que** le modulateur (PWM3) est synchronisé sur un premier modulateur (PWM1) du premier convertisseur (W1) grâce à la synchronisation d'un premier signal porteur (T1) du premier modulateur (PWM1) sur le signal porteur d'alimentation (T3) du modulateur (PWM3).

3. Dispositif selon la revendication 1 **caractérisé par le fait qu'**il est prévu un module d'alimentation (10) qui produit à partir d'une tension alternative une tension continue qui alimente le premier convertisseur (W1) et / ou le convertisseur suivant (W2), les éléments de circuit du module d'alimentation (10), produisant une tension continue à partir d'une tension alternative, étant déclenchés avec une modulation d'impulsions en largeur grâce à un modulateur d'impulsions d'alimentation en largeur (PWM3) et ce dernier étant synchronisé avec le premier modulateur (PWM1) et / ou le modulateur suivant (PWM2).

4. Dispositif selon la revendication 2 **caractérisé par le fait qu'**il est prévu un autre convertisseur (W2) qui produit une tension alternative à partir d'une tension continue, les éléments de circuit de l'autre convertisseur (W2) étant déclenchés avec une modulation d'impulsions en largeur grâce à un autre modulateur (PWM2) et ce dernier étant synchronisé sur le premier modulateur (PWM1) et /ou le modulateur d'impulsions en largeur (PWM3).

5. Dispositif selon une des revendications 2 à 4 **caractérisé par le fait qu'**un signal de synchronisation (14) est envoyé au premier modulateur d'impulsions en largeur (PWM1) et / ou au modulateur d'impulsions d'alimentation en largeur (PWM3) et / ou au modulateur d'impulsions en largeur suivant (PWM2).

6. Dispositif selon une des revendications 2 à 5 **caractérisé par le fait qu'**un premier signal porteur (T1) du premier modulateur d'impulsions en largeur (PWM1) est synchronisé sur un autre signal porteur (T2) du modulateur suivant (PWM2) et / ou sur un signal porteur d'alimentation (T3) du modulateur d'impulsions d'alimentation en largeur (PWM3).

7. Dispositif selon la revendication 6 **caractérisé par le fait qu'**un signal triangulaire est utilisé comme premier et / ou deuxième signal porteur (T1, T2) et / ou signal porteur d'alimentation (T3).

8. Dispositif selon la revendication 7 **caractérisé par le fait que** la mesure d'une grandeur (16) pour générer une grandeur de commande ou de réglage a lieu au moment (t0, t1) où le signal triangulaire change de direction.

9. Dispositif selon une des revendications précédentes **caractérisé par le fait qu'**un convertisseur de courant est utilisé comme module d'alimentation (10).
